# EUROPEAN PATENT APPLICATION

(11) **EP 4 773 267 A1**
(43) Date of publication of application: **08.07.2026**
(21) Application number: 23952661.9
(22) Date of filing: 21.09.2023
(51) Int. Cl.: H01M 10/04, H01M 50/20

(54) **CUSHIONING MEMBER, BATTERY CELL, BATTERY, AND ELECTRIC DEVICE**

(71) Applicant: Contemporary Amperex Technology Co., Limited, Ningde, Fujian 352100 (CN)
(72) Inventor: LIN, Chenhui, Ningde, Fujian 352100 (CN); HE, Jianfu, Ningde, Fujian 352100 (CN); YE, Yonghuang, Ningde, Fujian 352100 (CN)
(74) Representative: Ziebig Hengelhaupt Intellectual Property Attorneys Patentanwaltskanzlei PartGmbB
(86) International application number: PCT/CN2023/120504
(87) International publication number: WO 2025/060005

(57) **Abstract**

A cushioning member (200), a battery cell (100), a battery (1000), and an electric device (2000). The cushioning member (200) is used inside the battery cell (100), the battery cell (100) comprising an electrode assembly (120). The cushioning member (200) has a pressure-bearing face (201) facing towards or away from the electrode assembly (120), the pressure-bearing face (201) being provided with avoidance slots (202).

## Description

### TECHNICAL FIELD

The present application relates to the field of batteries, and in particular, to a buffer member, a battery cell, a battery, and an electric apparatus.

### BACKGROUND

Energy conservation and emission reduction are crucial to the sustainable development of the automobile industry. Electric vehicles, with their advantages in energy conservation and emission reduction, have become an important part of the sustainable development of the automobile industry. For electric vehicles, battery technologies are an important factor in connection with their development.

During the cyclic operation of a battery, an electrode assembly repeatedly swells, and the swelling force acts on a housing, causing the housing to swell and deform, which affects the service life of the battery.

### SUMMARY

In view of the above problems, the present application provides a buffer member, a battery cell, a battery, and an electric apparatus, which can mitigate the problem of swelling force during use of the battery.

According to a first aspect, the present application provides a buffer member for use inside a battery cell, the battery cell including a housing and an electrode assembly, where the buffer member has a pressure-bearing surface facing or facing away from the electrode assembly, and the pressure-bearing surface is provided with a clearance groove.

In the technical solution of the embodiments of the present application, by providing a clearance groove on the pressure-bearing surface of the buffer member, an effective area of the buffer member can be reduced, so that on the basis of satisfying good support performance of the buffer member, the compressibility ratio of the buffer member is improved. By placing the buffer member inside the battery cell, during the manufacturing process of the battery, the buffer member has strong support capability and can satisfy the requirements for anti-deformation performance in vacuum baking. During the cycling of the battery cell, the buffer member can provide strong support capability, reducing electrode plate deformation, improving the phenomenon of electrode plate wrinkling caused by swelling, and mitigating lithium precipitation or sodium precipitation problems during cycling. In the later stage of cycling of the battery cell, the buffer member can be greatly compressed, reducing the occupation of space inside the housing by the buffer member, ensuring the swellable space of the electrode assembly to a certain extent, mitigating the swelling force of the battery cell, and prolonging the service life of the battery cell.

In some embodiments, the buffer member includes a support plate and a plurality of buffer blocks, the buffer blocks are disposed on the support plate, the plurality of buffer blocks are arranged at intervals, and a gap between two adjacent buffer blocks forms the clearance groove. In the above technical solution, by setting the buffer member to include a plurality of buffer blocks and forming the overall buffer member by splicing and combining the plurality of buffer blocks with the support plate, each buffer block has a simple structure and simple manufacturing process, which is convenient for manufacturing and forming.

In some embodiments, the buffer blocks are fixedly connected to the support plate. In the above technical solution, the plurality of buffer blocks can be directly fixed on the support plate to achieve combined assembly of the buffer member, thereby improving the stability of the buffer member.

In some embodiments, the buffer blocks are adhesively engaged with the support plate. In the above technical solution, the plurality of buffer blocks can be directly adhered to the support plate to achieve combined assembly of the buffer member. The assembly process is simple, which is convenient for assembly and forming, reducing the manufacturing difficulty of the entire buffer member, and reducing the manufacturing cost.

In some embodiments, the plurality of buffer blocks on one side of the support plate are arranged at intervals along a length direction and/or a width direction of the support plate. In the above technical solution, the support of the buffer member to the electrode assembly is uniform, and the compression deformation can also be more uniform, thereby effectively mitigating the swelling force of the battery cell.

In some embodiments, a distance between two adjacent buffer blocks is L1, L1 being not greater than 20 mm. In the above technical solution, the problem of uneven stress distribution caused by an excessively large distance between two buffer blocks can be avoided, thereby enhancing the support effect of the buffer member.

In some embodiments, a thickness of the support plate ranges from 30 µm to 200 µm. In the above technical solution, this can avoid the problems of the buffer member occupying excessive space and the buffer member being difficult to compress due to an excessive thickness of the buffer member to a certain extent, and can also enhance the support effect to the buffer block, enhancing the support capability of the buffer member, thereby satisfying the requirements for anti-deformation performance in vacuum baking. Alternatively, during the cycling of the battery cell, the buffer member can provide strong support capability, reduce electrode plate deformation, and the like.

In some embodiments, a compression rate of the support plate under 1 MPa is not greater than 5%. In the above technical solution, by limiting the compression rate of the support plate within 5%, the support plate can achieve a reliable support effect to the buffer block, thereby improving the support performance of the buffer member.

In some embodiments, a material of the support plate includes at least one of high-density polyethylene, polymethacrylate, polyethylene terephthalate, or polytetrafluoroethylene. In the above technical solution, by using the above materials, the support plate can achieve a reliable support effect to the buffer block, thereby improving the support performance of the buffer member.

In some embodiments, the buffer member is a buffer block, a portion of an outer surface of the buffer block is recessed inward to form a groove, and the groove forms the clearance groove. In the above technical solution, by designing the buffer member as an integral structural member and forming the clearance groove by grooving, the manufacturing is convenient, and at the same time, the assembly steps of the buffer member can be reduced, the assembly workload is reduced, and the manufacturing cost is reduced.

In some embodiments, the groove includes a plurality of grooves, and the plurality of grooves are arranged at intervals along a length direction of the buffer member and/or a width direction of the buffer member. In the above technical solution, the arrangement of the grooves can be more uniform, thereby making the support of the buffer member to the electrode assembly more uniform, and the compression deformation can also be more uniform, thereby effectively mitigating the swelling force of the battery cell.

In some embodiments, a dimension of each groove in the length direction of the buffer member is L2, and a dimension of each groove in the width direction of the buffer member is L3, L2 being not greater than 20 mm, and L3 being not greater than 20 mm. In the above technical solution, this can both make the buffer member have good support performance and improve the compressibility ratio of the buffer member.

In some embodiments, the groove forms a strip-shaped groove extending along the length direction of the buffer member or the width direction of the buffer member. In the above technical solution, on the basis of making the buffer member have good support performance and high compressibility ratio, the quantity of grooves is reduced, the structure of the buffer member is simplified, and the manufacturing and forming of the buffer member is facilitated.

In some embodiments, a material of the buffer blocks includes at least one of polyethylene, polypropylene, polyurethane, or silicone rubber. In the above technical solution, by using such foamed material members, the manufacturing cost can be reduced on the basis of improving the compressibility of the buffer member.

In some embodiments, opposite sides of the buffer member in a thickness direction thereof are respectively provided with the clearance groove, and the clearance grooves are oppositely arranged in the thickness direction of the buffer member. In the above technical solution, when the electrode assembly swells, this can prevent the buffer member from moving, deforming, or the like in its length or width direction, which is convenient for improving the stability of the buffer member, and thereby improving the reliability of the support of the buffer member.

In some embodiments, an area of the pressure-bearing surface of the buffer member is S1, and an area of the clearance groove is S2, S2/S1 ranging from 0 to 70%. In the above technical solution, the effective area of the buffer member can be reduced, the compressibility ratio of the buffer member is improved, making the buffer member have both good anti-deformation capability and high compressibility ratio, thereby mitigating the swelling force of the battery cell in the later stage.

In some embodiments, S2/S1 ranges from 20% to 50%. In the above technical solution, the buffer member can further have both good anti-deformation capability and high compressibility ratio, thereby mitigating the swelling force of the battery cell in the later stage.

In some embodiments, a thickness of the buffer member is H1, and a dimension of the clearance groove in the thickness direction of the buffer member is H2, H2/H1 ranging from 0 to 90%. In the above technical solution, the buffer member can have both good anti-deformation capability and high compressibility ratio, thereby mitigating the swelling force of the battery cell in the later stage.

In some embodiments, H2/H1 ranges from 30% to 85%. In the above technical solution, the buffer member can further have both good anti-deformation capability and high compressibility ratio, thereby mitigating the swelling force of the battery cell in the later stage.

In some embodiments, a compression rate of the buffer member under 1 MPa is greater than 60%. In the above technical solution, the buffer member can be compressed and deformed with the swelling of the electrode assembly to absorb the swelling of the electrode assembly as much as possible and mitigate the swelling force of the battery cell in the later stage of cycling.

According to a second aspect, the present application provides a battery cell, including a housing, an electrode assembly, and the buffer member provided according to the first aspect of the present application, where the buffer member and the electrode assembly are both disposed in the housing. In the above technical solution, by using the above buffer member, during the manufacturing process of the battery, the buffer member has strong support capability and can satisfy the requirements for anti-deformation performance in vacuum baking. In the early stage of cycling of the battery cell, the buffer member can provide strong support capability, reducing electrode plate deformation, improving the phenomenon of electrode plate wrinkling caused by swelling, and mitigate lithium precipitation or sodium precipitation problems during cycling. In the later stage of cycling of the battery cell, the buffer member can be greatly compressed, reducing the occupation of space inside the housing by the buffer member, ensuring the swellable space of the electrode assembly to a certain extent, mitigating the swelling force of the battery cell, and prolonging the service life of the battery cell.

In some embodiments, the buffer member is disposed between the housing and the electrode assembly. In the above technical solution, by providing the buffer member between the housing and the electrode assembly, the installation is convenient, and the stress on the housing when the electrode assembly swells can be reduced, effectively reducing the probability of deformation of the housing.

In some embodiments, the battery cell includes a plurality of electrode assemblies, and the buffer member is disposed between two adjacent electrode assemblies. In the above technical solution, by providing the buffer member between the electrode assemblies, the buffer member can effectively absorb the swelling amount of the electrode assemblies, thereby reducing the stress on the housing when the electrode assemblies swell.

In some embodiments, a group margin of the battery cell ranges from 96% to 105%. In the above technical solution, by using the above buffer member, the group margin of the battery cell is between 96% and 105%, that is, in a thickness direction of the battery cell, the buffer member and the electrode assembly can substantially fill the entire inner cavity of the housing, thereby ensuring that the buffer member can provide effective support to the electrode assembly to a certain extent and mitigating interface abnormality problems such as electrode plate wrinkling caused by failure of the support of the buffer member to the electrode assembly.

In some embodiments, a ratio of a thickness of the buffer member to a thickness of the electrode assembly ranges from 2% to 15%. In the above technical solution, the energy density of the battery cell can be improved, and the buffer member can provide effective buffering, mitigating the swelling force on the housing when the electrode assembly swells, and effectively reducing the probability of deformation of the housing.

In some embodiments, the electrode assembly includes a plurality of electrode plates arranged in a wound manner, and an outer peripheral surface of the electrode assembly includes a straight portion and a bent portion connected to an end of the straight portion, at least one of the straight portion and the bent portion being oppositely provided with the buffer member.

In the above technical solution, the buffer member can buffer and support at least at one of the straight portion and the bent portion, mitigating the risk of electrode fracture and lithium precipitation of the electrode assembly.

In some embodiments, the electrode assembly includes a plurality of positive electrode plates and a plurality of negative electrode plates arranged in a stacked manner along a first direction, and the buffer member is oppositely provided with a surface of the electrode assembly on at least one side along the first direction.

In the above technical solution, the buffer member can provide effective buffering and support for the stacked electrode assembly, and the required area of the buffer member is small and the cost is low.

In some embodiments, a groove opening of the clearance groove is formed on the pressure-bearing surface, and a stacking direction of electrode plate in a region of the electrode assembly opposite to the pressure-bearing surface is perpendicular to the pressure-bearing surface. In the above technical solution, during use, the electrode plate is more prone to swelling along the stacking direction, and by making the stacking direction of the electrode plate in the region opposite to the pressure-bearing surface perpendicular to the pressure-bearing surface, the pressure-bearing surface can more fully provide buffering and support to the electrode plate, so as to enhance the effect of reducing electrode plate wrinkling.

According to a third aspect, the present application provides a battery, including the battery cell in the above embodiments.

According to a fourth aspect, the present application provides an electric apparatus, including the battery in the above embodiments, where the battery is configured to supply electrical energy.

The foregoing description is merely an overview of the technical solution of the present application. For a better understanding of the technical means in the present application such that they can be implemented according to the content of the specification, and to make the above and other objectives, features, and advantages of the present application more obvious and easier to understand, the following describes specific embodiments of the present application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit the present application. In addition, in all the accompanying drawings, the same reference signs represent the same components. In the drawings:
FIG. 1 is a schematic diagram of an electric apparatus in the related art;
FIG. 2 is a schematic diagram of a battery in the related art;
FIG. 3 is a schematic diagram of a battery cell in the related art;
FIG. 4 is a schematic diagram of a buffer member according to some embodiments of the present application;
FIG. 5 is a partial schematic structural diagram of an embodiment shown in FIG. 4;
FIG. 6 is a schematic diagram of a buffer member according to some other embodiments of the present application;
FIG. 7 is a schematic diagram of a buffer member according to still some other embodiments of the present application;
FIG. 8 is a cross-sectional view of an embodiment shown in FIG. 7;
FIG. 9 is a schematic diagram of a buffer member according to yet some other embodiments of the present application;
FIG. 10 is a schematic diagram of a buffer member according to some other embodiments of the present application;
FIG. 11 is a cross-sectional view of an embodiment shown in FIG. 10;
FIG. 12 is a schematic diagram of a buffer member according to still some other embodiments of the present application;
FIG. 13 is a cross-sectional view of an embodiment shown in FIG. 12;
FIG. 14 is a schematic diagram of a battery cell according to some embodiments of the present application;
FIG. 15 is a schematic diagram of a battery cell according to some other embodiments of the present application;
FIG. 16 is a schematic diagram of a battery cell according to still some other embodiments of the present application; and
FIG. 17 is a schematic diagram of an electrode assembly according to some embodiments of the present application.

### Reference signs:

battery 1000, electric apparatus 2000,
battery cell 100, housing 110, housing body 111, end cover 112, electrode assembly 120, positive electrode plate 1201, negative electrode plate 1202, straight portion 121, bent portion 122,
buffer member 200, pressure-bearing surface 201, clearance groove 202,
support plate 10, buffer block 20, and groove 21.

### DESCRIPTION OF EMBODIMENTS

To make the objectives, technical solutions, and advantages of the embodiments of the present application clearer, the following clearly describes the technical solutions in the embodiments of the present application with reference to the accompanying drawings in the embodiments of the present application. Apparently, the described embodiments are some but not all of the embodiments of the present application. All other embodiments obtained by persons of ordinary skill in the art based on some embodiments of the present application without creative efforts shall fall within the protection scope of the present application.

Unless otherwise defined, all technical and scientific terms used in the present application shall have the same meanings as commonly understood by persons skilled in the art to which the present application relates. The terms used in the specification of the present application are intended to merely describe the specific embodiments rather than to limit the present application. The terms "include", "comprise", and any variations thereof in the specification, claims, and brief description of drawings of the present application are intended to cover non-exclusive inclusions. In the specification, claims, or accompanying drawings of the present application, the terms "first", "second", and the like are intended to distinguish between different objects rather than to indicate a particular sequence or relative importance.

In the present application, reference to "embodiment" means that specific features, structures, or characteristics described with reference to the embodiment may be incorporated in at least one embodiment of the present application. The word "embodiment" appearing in various positions in the specification does not necessarily refer to the same embodiment or an independent or alternative embodiment that is exclusive of other embodiments.

In the description of the present application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in the present application as suitable to specific situations.

The term "and/or" in the present application is only an associative relationship for describing associated objects, indicating that three relationships may be present. For example, A and/or B may indicate the following three cases: presence of only A; presence of both A and B; and presence of only B. In addition, the character "/" in the present application generally indicates an "or" relationship between the contextually associated objects.

In the embodiments of the present application, the same reference signs denote the same components, and for brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of the present application are merely for illustrative purposes and should not constitute any limitations on the present application.

In the present application, "a plurality of" means more than two (inclusive).

The battery in the present application is a single physical module that includes one or more battery cells for providing a higher voltage and capacity. For example, the battery mentioned in the present application may include a battery module, a battery pack, or the like. Some batteries may include a box for packaging one or more battery cells or a plurality of battery modules. The box can prevent a liquid or another foreign matter from affecting charging or discharging of the battery cells. Certainly, some batteries may not include the above box and are directly provided in a battery installation compartment of an electric apparatus.

In the present application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of the present application. The battery cell may be cylindrical, flat, rectangular, or of other shapes, which is not limited in the embodiments of the present application either. Battery cells are typically divided into three types by packaging method: cylindrical battery cell, prismatic battery cell, and pouch battery cell. This is not limited in the embodiments of the present application either.

For example, the battery cell may include a housing, an electrode assembly, and an electrolyte. The housing is configured to accommodate the electrode assembly and the electrolyte. The electrode assembly is composed of a positive electrode plate, a negative electrode plate, and a separator. The battery cell works mainly depending on migration of metal ions between the positive electrode plate and the negative electrode plate. The positive electrode plate includes a positive electrode current collector and a positive electrode active substance layer. The positive electrode active substance layer is applied on a surface of the positive electrode current collector. A positive electrode current collector uncoated with the positive electrode active substance layer protrudes out of a positive electrode current collector coated with the positive electrode active substance layer and serves as a positive electrode tab. A lithium-ion battery is used as an example, in which, the positive electrode current collector may be made of aluminum, and the positive electrode active substance may be lithium cobaltate, lithium iron phosphate, ternary lithium, lithium manganate, or the like.

The negative electrode plate includes a negative electrode current collector and a negative electrode active substance layer. The negative electrode active substance layer is applied on a surface of the negative electrode current collector. A negative electrode current collector uncoated with the negative electrode active substance layer protrudes out of a negative electrode current collector coated with the negative electrode active substance layer and serves as a negative electrode tab. The negative electrode current collector may be made of copper, and the negative electrode active substance may be carbon, silicon, or the like. In order to guarantee that no fusing occurs when a large current passes, there are multiple positive electrode tabs that are stacked together, and there are multiple negative electrode tabs that are stacked together.

The separator may be made of PP (polypropylene, polypropylene), PE (polyethylene, polyethylene), or the like. In addition, the electrode assembly may be a wound structure or a laminated structure. However, the embodiments of the present application are not limited thereto.

A pole or the like may be provided on the battery cell and connected to the tab to serve as an electrical connection portion of the battery cell. Moreover, the battery cell may have a pressure relief portion, and when the internal pressure of the battery cell is too high (for example, thermal runaway), the pressure relief portion is configured to release internal substances (such as gas, liquid, and particulate matter) of the battery cell to reduce the internal pressure of the battery cell and avoid dangerous accidents such as explosion and combustion of the battery cell due to excessive rapid pressurization inside the battery cell. For example, the pressure relief portion may be an explosion-proof valve, a rupture disk, and the like.

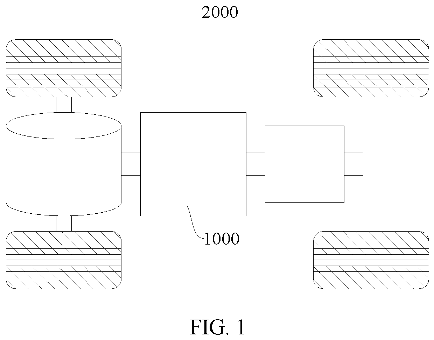

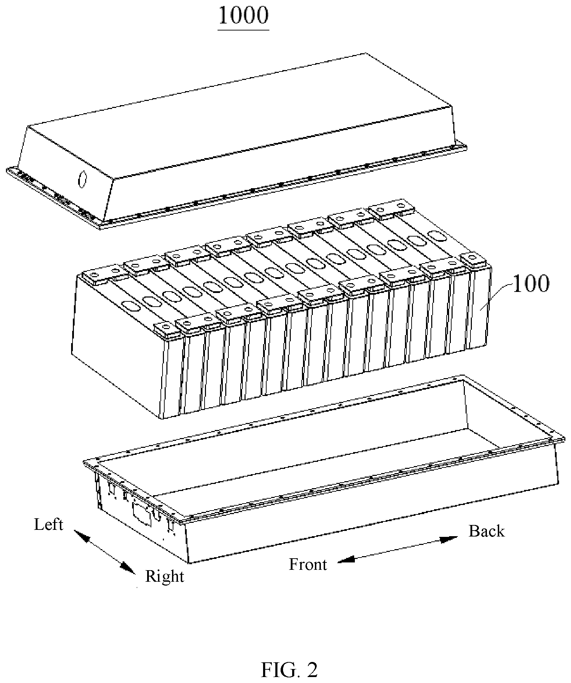

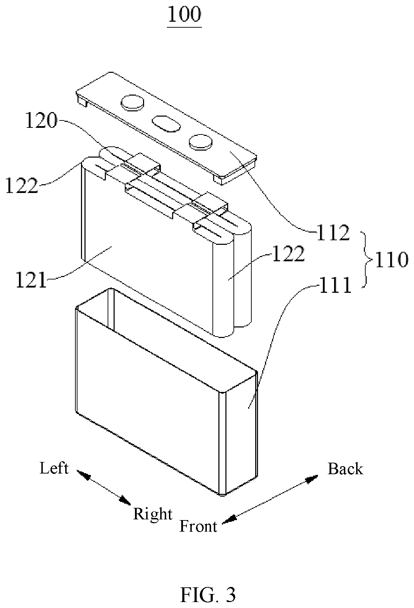

As shown in FIG. 1 and FIG. 2, in some electric apparatuses, a battery is used for power supply, the battery includes a box and a battery cell, where the box includes an upper shell and a lower shell. As shown in FIG. 3, the battery cell includes a housing and an electrode assembly, during the cyclic operation of the battery cell, the electrode assembly repeatedly swells, and the swelling force acts on the housing, causing the housing to swell and deform. Some designs provide a buffer member inside the housing, and the swelling force on the housing is mitigated by compressing the buffer member. However, in order to satisfy the requirements of battery vacuum baking, the buffer member needs to have excellent anti-deformation performance, and in the later stage during use of the battery, the swelling amount of the electrode assembly is large, and the buffer member needs greater compression to reduce the space occupied by the buffer member, that is, the buffer member needs high compressibility. However, good anti-vacuum deformation and high compressibility are difficult to be compatible.

To this end, the present application provides a buffer member. The buffer member has two oppositely arranged sides, and the buffer member has a pressure-bearing surface facing or facing away from the electrode assembly, the pressure-bearing surface being provided with a clearance groove.

In the buffer member of the above structure, by providing a clearance groove on the buffer member, an effective area of the buffer member can be reduced, so that on the basis of satisfying good support performance of the buffer member, the compressibility ratio of the buffer member is improved. By placing the buffer member inside the battery cell, during the manufacturing process of the battery, the buffer member has strong support capability and can satisfy the requirements for anti-deformation performance in vacuum baking. In the early stage of cycling of the battery cell, the buffer member can provide strong support capability, reducing electrode plate deformation, improving the phenomenon of electrode plate wrinkling caused by swelling, and mitigating lithium precipitation or sodium precipitation problems during cycling. In the later stage of cycling of the battery cell, the buffer member can be greatly compressed, reducing the occupation of space inside the housing by the buffer member, ensuring the swellable space of the electrode assembly to a certain extent, mitigating the swelling force of the battery cell, and prolonging the service life of the battery cell.

The buffer member disclosed in the embodiments of the present application is used in a battery cell, and the battery 1000 having the battery cell disclosed in the embodiments of the present application may be used in, but is not limited to, electric apparatuses 2000 such as vehicles, ships, or aircrafts, and can make the power system constituting the electric apparatus 2000, the battery 1000, and the like disclosed in the present application, to ensure the safety and reliability of use of the electric apparatus 2000.

For example, the electric apparatus 2000 disclosed in the embodiments of the present application may be, but is not limited to, a vehicle, a mobile phone, a notebook computer, a ship, a spacecraft, an electric toy, an electric tool, or the like. The vehicle may be a fossil fuel vehicle, a gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

The following describes a buffer member 200 according to embodiments of the present application with reference to the accompanying drawings.

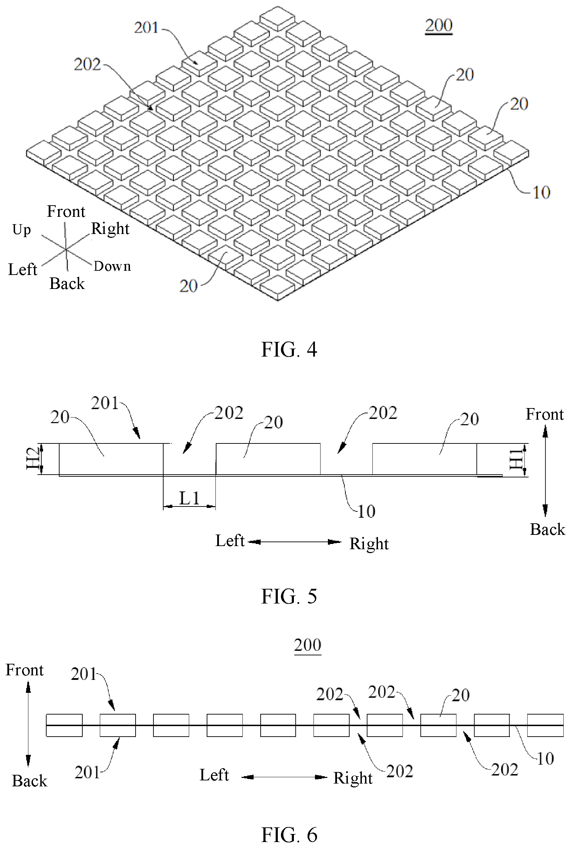

As shown in FIG. 4 to FIG. 13, the buffer member 200 of the embodiments of the present application is used inside a battery cell 100, the battery cell 100 including a housing 110 and an electrode assembly 120, where the buffer member 200 has a pressure-bearing surface 201 facing or facing away from the electrode assembly 120, and the pressure-bearing surface 201 is provided with a clearance groove 202.

The pressure-bearing surface 201 is the surface of the buffer member 200 that is compressed when the electrode assembly 120 swells, and the pressure-bearing surface 201 may be a surface that directly faces the electrode assembly 120 to support and bear pressure, or the pressure-bearing surface 201 may be a surface that indirectly bears pressure facing away from the electrode assembly 120. For example, the surface of the buffer member 200 facing the housing 110 and facing away from the electrode assembly 120, and the surface of the buffer member 200 facing the electrode assembly 120 are both pressure-bearing surfaces 201.

As shown in FIG. 4, FIG. 5, FIG. 7, FIG. 8, FIG. 10, and FIG. 11, one pressure-bearing surface 201 of the buffer member 200 has a clearance groove 202, the clearance groove 202 is provided on one side of the buffer member 200 herein, and this side can come into contact with one of the electrode assembly 120 and the housing 110, that is, the positioning and fixing of the buffer member 200 is achieved, and this side or the other side of the buffer member 200 comes into contact with the electrode assembly 120, so that the buffer member 200 can support the electrode assembly 120. At the same time, the position of this side of the buffer member 200 at the clearance groove 202 does not come into contact with the electrode assembly 120 and the housing 110.

That is, the clearance groove 202 is a space, and by providing the clearance groove 202, a portion of the buffer member 200 is spaced from the housing 110 or the electrode assembly 120, thereby reducing the effective area of the buffer member 200. On the basis of ensuring that the buffer member 200 has a certain anti-deformation capability, the compressibility ratio of the buffer member 200 is improved. Thus, during a charging and discharging cycle of the battery cell 100, the buffer member 200 can mitigate the swelling force exerted by the electrode assembly 120 on the housing 110 through compression deformation, and in the later stage of cycling, the buffer member 200 can have a large compression amount, reducing the space occupied by the buffer member 200 itself, ensuring the swellable space of the electrode assembly 120 to a certain extent, thereby mitigating the swelling force of the battery cell 100.

Thus, the buffer member 200 has strong anti-deformation capability and high compressibility ratio, which can satisfy the manufacturing requirements of the battery 1000. For example, the requirements for anti-deformation of the buffer member 200 in the vacuum baking process can be satisfied, and at the same time, the needs of the full life cycle of the battery cell 100 can be satisfied.

As shown in FIG. 6, FIG. 9, FIG. 12, and FIG. 13, both pressure-bearing surfaces 201 of the buffer member 200 have a clearance groove 202, that is, opposite sides of the buffer member 200 each have a clearance groove 202, each side can come into contact with one of the electrode assembly 120 and the housing 110 through the pressure-bearing surface 201, and the other side can also come into contact with the electrode assembly 120 or the housing 110 through the pressure-bearing surface 201. On the basis of achieving the positioning and fixing of the buffer member 200, the buffer member 200 can support the electrode assembly 120, and the position of the buffer member 200 at the clearance groove 202 does not come into contact with the electrode assembly 120 and the housing 110, thereby further reducing the effective area of the buffer member 200. On the basis of ensuring that the buffer member 200 has a certain anti-deformation capability, the compressibility ratio of the buffer member 200 is improved.

In the buffer member 200 of the above structure, by providing a clearance groove 202 on the buffer member 200, the effective area of the buffer member 200 can be reduced, so that on the basis of satisfying good support performance of the buffer member 200, the compressibility ratio of the buffer member 200 is improved. By placing the buffer member 200 inside the battery cell 100, during the manufacturing process of the battery 1000, the buffer member 200 has strong support capability and can satisfy the requirements for anti-deformation performance in vacuum baking. In the early stage of cycling of the battery cell 100, the buffer member 200 can provide strong support capability, reducing electrode plate deformation, improving the phenomenon of electrode plate wrinkling caused by swelling, and mitigating lithium precipitation or sodium precipitation problems during cycling. In the later stage of cycling of the battery cell 100, the buffer member 200 can be greatly compressed, reducing the occupation of space inside the housing 110 by the buffer member 200, ensuring the swellable space of the electrode assembly 120 to a certain extent, mitigating the swelling force of the battery cell 100, and prolonging the service life of the battery cell 100.

As shown in FIG. 4 to FIG. 6, in some embodiments, the buffer member 200 includes a support plate 10 and a plurality of buffer blocks 20, the buffer blocks 20 are disposed on the support plate 10, the plurality of buffer blocks 20 are arranged at intervals, and a gap between two adjacent buffer blocks 20 forms the clearance groove 202.

As shown in FIG. 4 to FIG. 6, the support plate 10 is an integral plate-like structure, and the buffer block 20 is disposed on the support plate 10. As shown in FIG. 4 and FIG. 5, the plurality of buffer blocks 20 are provided on one side of the support plate 10, and as shown in FIG. 6, the plurality of buffer blocks 20 are respectively provided on opposite sides of the support plate 10. The buffer block 20 can come into contact with the housing 110 or the electrode assembly 120. The plurality of buffer blocks 20 are arranged at intervals, and a gap is formed between two adjacent buffer blocks 20, where the gap is the clearance groove 202 of the buffer member 200.

In the above technical solution, by setting the buffer member 200 to include a plurality of buffer blocks 20 and forming the overall buffer member 200 by splicing and combining the plurality of buffer blocks 20 with the support plate 10, each buffer block 20 has a simple structure and simple manufacturing process, which is convenient for manufacturing and forming.

In some embodiments, the buffer block 20 is fixedly connected to the support plate 10.

By fixedly connecting the buffer block 20 to the support plate 10, the assembly of the entire buffer member 200 is achieved, where the connection manner herein includes adhesion, insertion, and the like, thereby improving the stability of the buffer member 200.

In some embodiments, the buffer blocks 20 are adhesively engaged with the support plate 10, and the plurality of buffer blocks 20 can be directly adhered to the support plate 10 to achieve combined assembly of the buffer member 200. The assembly process is simple, which is convenient for assembly and forming, reducing the manufacturing difficulty of the entire buffer member 200, and reducing the manufacturing cost.

As shown in FIG. 4 to FIG. 6, in some examples, the plurality of buffer blocks 20 on one side of the support plate 10 are arranged at intervals along a length direction and/or a width direction of the support plate 10.

As shown in FIG. 4 and FIG. 5, the front side of the support plate 10 has a plurality of buffer blocks 20, and the plurality of buffer blocks 20 can be arranged at intervals along the length direction (the left-right direction as shown in FIG. 4) of the support plate 10, and each buffer block 20 can extend along the width direction of the support plate 10, so that the buffer blocks 20 are uniformly arranged on the support plate 10. The plurality of buffer blocks 20 can be arranged at intervals along the width direction (the up-down direction as shown in FIG. 4) of the support plate 10, and each buffer block 20 can extend along the length direction of the support plate 10, so that the buffer blocks 20 are uniformly arranged on the support plate 10. Certainly, the buffer blocks 20 can also be arranged in multiple rows and multiple columns, thereby making the arrangement of the buffer blocks 20 more uniform, further making the support of the buffer member 200 to the electrode assembly 120 more uniform, and the compression deformation can also be more uniform, thereby effectively mitigating the swelling force of the battery cell 100.

As shown in FIG. 5, in some embodiments, a distance between two adjacent buffer blocks 20 is L1, L1 being not greater than 20 mm.

As shown in FIG. 5, two adjacent buffer blocks 20 are arranged at intervals along the left-right direction, and the distance between two adjacent buffer blocks 20 is L1. Certainly, if two adjacent buffer blocks 20 are arranged at intervals along the up-down direction, the distance between two adjacent buffer blocks 20 is still defined as L1. If L1 is too large, that is, the distance between two adjacent buffer blocks 20 is too large, it leads to uneven stress distribution, and at the same time, it is easy to cause the space of the clearance groove 202 to be too large, and the contact area of the buffer member 200 with the electrode assembly 120 or the housing 110 to be too small, thereby resulting in an inability to provide effective support. To this end, L1 is limited to not greater than 20 mm, that is, L1 may be 20 mm, or any value less than 20 mm, such as 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, or the like. Thus, the problem of uneven stress distribution caused by an excessively large distance between two buffer blocks 20 can be avoided, thereby enhancing the support effect of the buffer member 200.

In addition, if L1 is too small, the space of the clearance groove 202 is too small, and it is difficult to effectively improve the compression rate of the buffer member 200. In some preferred examples, 5 mm ≤ L1 ≤ 10 mm. For example, L1 may be 5 mm, 5.5 mm, 6 mm, 6.5 mm, 7 mm, 7.5 mm, 8 mm, 8.5 mm, 9 mm, 9.5 mm, 10 mm, or the like. Thus, this can make the buffer member 200 have good support performance and improve the compressibility ratio of the buffer member 200.

As shown in FIG. 5 and FIG. 6, in some embodiments, a thickness of the support plate 10 ranges from 30 µm to 200 µm.

As shown in FIG. 5 and FIG. 6, if the thickness of the support plate 10 is too large, it is easy to cause the buffer member 200 to be too thick, the buffer member 200 occupies excessive space, affecting the energy density of the battery cell 100, and at the same time, the support plate 10 being too thick makes the hardness of the buffer member 200 increase, making the buffer member 200 difficult to compress substantially. If the thickness of the support plate 10 is too small, it is easy to cause the support strength of the buffer member 200 to be too low, leading to poor fixing reliability of the buffer blocks 20. To this end, the thickness of the support plate 10 may be limited to 30 µm to 200 µm, and the thickness of the support plate 10 may be 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, or 200 µm.

Thereby, this can avoid the problems of the buffer member 200 occupying excessive space and the buffer member 200 being difficult to compress due to an excessive thickness of the buffer member 200 to a certain extent, and can also enhance the support effect to the buffer block 20, enhancing the support capability of the buffer member 200, thereby satisfying the requirements for anti-deformation performance in vacuum baking. Alternatively, during the cycling of the battery cell 100, the buffer member 200 can provide strong support capability, reduce electrode plate deformation, and the like.

In some embodiments, a compression rate of the support plate 10 under 1 MPa is less than 5%.

The compression rate of the support plate 10 under 1 MPa is less than 5%, that is, the compression rate of the support plate 10 under 1 MPa is 5%, or less than 5%, such as 4%, 3%, 2%, 1%, or the compression rate may also be 0.

In the above technical solution, by limiting the compression rate of the support plate 10 within 5%, the support plate 10 can achieve a reliable support effect to the buffer block 20, thereby improving the support performance of the buffer member 200.

In some embodiments, a material of the support plate 10 includes at least one of high-density polyethylene, polymethacrylate, polyethylene terephthalate, or polytetrafluoroethylene.

The support plate 10 may be high-density polyethylene, polymethacrylate, polyethylene terephthalate, polytetrafluoroethylene, or a composite material member, and may also be formed by compounding other materials. By using the above materials, the support plate 10 can achieve a reliable support effect to the buffer block 20, thereby improving the support performance of the buffer member 200.

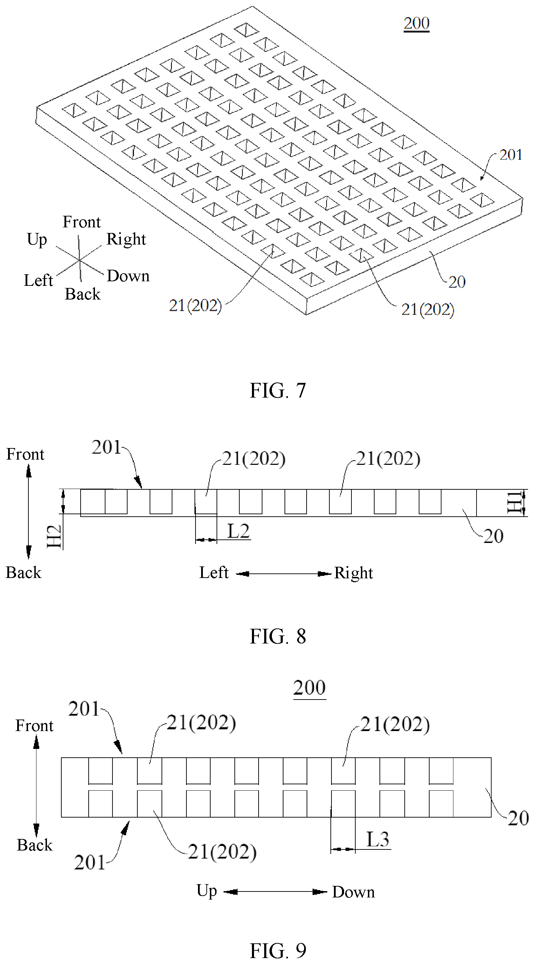

As shown in FIG. 7 to FIG. 13, in some embodiments, the buffer member 200 is a buffer block 20, a portion of an outer surface of the buffer block 20 is recessed inward to form a groove 21, and the groove 21 forms the clearance groove 202.

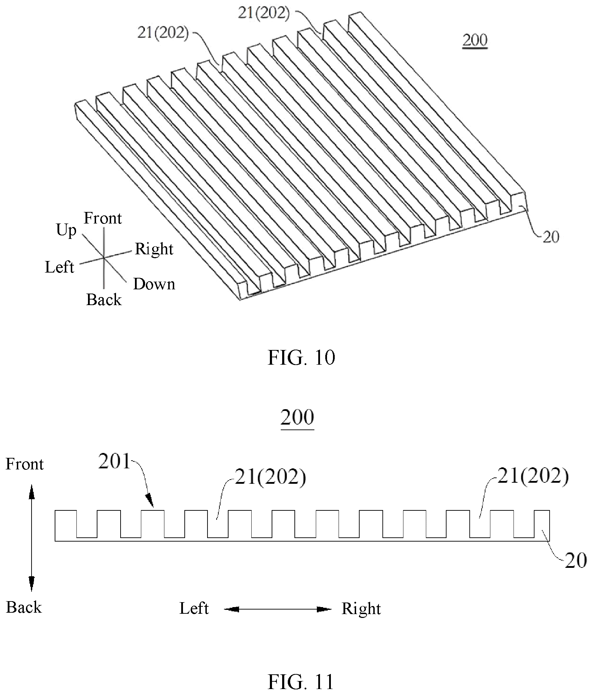

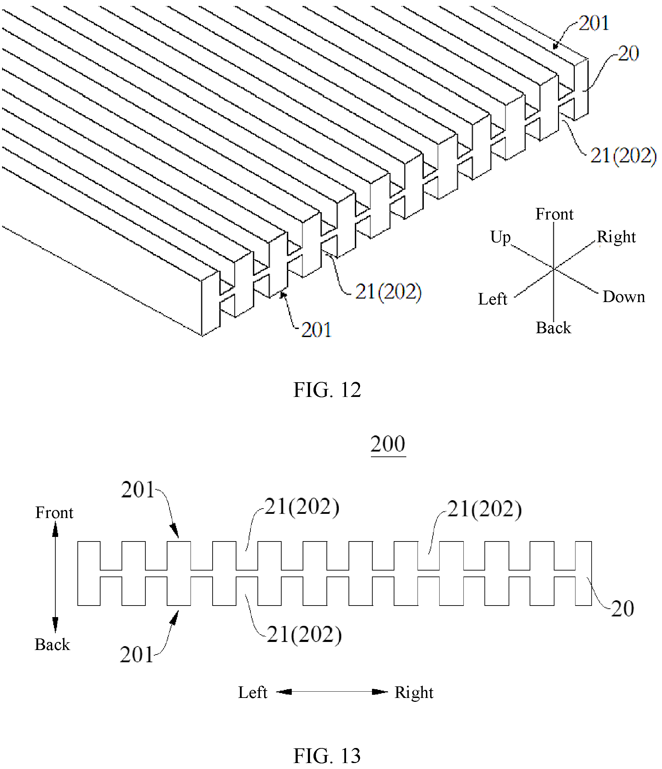

As shown in FIG. 7 to FIG. 13, the buffer block 20 is a block-like structure, the buffer block 20 overall forms the buffer member 200, the outer surface of the buffer block 20 has a groove 21 recessed inward, the groove 21 forms the clearance groove 202, the portion of the buffer block 20 where the groove 21 is not formed can come into contact with the electrode assembly 120 or the housing 110, and the bottom of the groove 21 is spaced from the electrode assembly 120 or the housing 110. That is, the buffer member 200 is an integral structural member, and the clearance groove 202 is formed by grooving. As shown in FIG. 7 and FIG. 10, one side outer surface of the buffer block 20 has a groove 21 recessed inward, and as shown in FIG. 12, outer surfaces of opposite sides of the buffer block 20 respectively have a groove 21 recessed inward.

It can be understood that the buffer block 20 forms a plate-like shape, where the buffer block 20 may form a square plate, a circular plate, or a triangular plate. By setting the buffer block 20 as a plate-like structure, it is convenient for the installation of the buffer member 200 inside the battery cell 100, and at the same time, the space occupied by the buffer member 200 is minimized as much as possible.

In the above technical solution, by designing the buffer member 200 as an integral structural member and forming the clearance groove 202 by grooving, the manufacturing is convenient, and at the same time, the assembly steps of the buffer member 200 can be reduced, the assembly workload is reduced, and the manufacturing cost is reduced.

As shown in FIG. 7 to FIG. 13, in some embodiments, the groove 21 includes a plurality of grooves, and the plurality of grooves 21 are arranged at intervals along a length direction of the buffer member 200 and/or a width direction of the buffer member 200.

As shown in FIG. 8, the front side of the buffer block 20 has a plurality of grooves 21, and the plurality of grooves 21 can be arranged at intervals along a length direction (the left-right direction as shown in FIG. 8) of the buffer block 20, and each groove 21 can extend along a width direction of the buffer block 20, so that the grooves 21 are uniformly arranged on the buffer block 20. The plurality of grooves 21 can be arranged at intervals along the width direction (the up-down direction as shown in FIG. 9) of the buffer block 20, and each groove 21 can extend along the length direction of the buffer block 20, so that the grooves 21 are uniformly arranged on the buffer block 20. Certainly, the grooves 21 can also be arranged in multiple rows and multiple columns, thereby making the arrangement of the grooves 21 more uniform, further making the support of the buffer member 200 to the electrode assembly 120 more uniform, and the compression deformation can also be more uniform, thereby effectively mitigating the swelling force of the battery cell 100.

As shown in FIG. 8, in some embodiments, a dimension of each groove 21 in the length direction of the buffer member 200 is L2, and a dimension of each groove 21 in the width direction of the buffer member 200 is L3, L2 being not greater than 20 mm, and L3 being not greater than 20 mm.

As shown in FIG. 8, if the length dimension or width dimension of the groove 21 is too large, it leads to uneven stress distribution, and at the same time, it is easy to cause the space of the clearance groove 202 to be too large, thereby resulting in an inability to provide effective support. To this end, L2 and L3 are limited to not greater than 20 mm, that is, L2 and L3 may be 20 mm, or any value less than 20 mm, such as L1 may be 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, or the like, where the values of L2 and L3 may be the same or different. Thus, the problem of uneven stress distribution caused by an excessively large distance between two buffer blocks 20 can be avoided, thereby enhancing the support effect of the buffer member 200.

In addition, if L2 and L3 are too small, the space of the clearance groove 202 is too small, and it is difficult to effectively improve the compression rate of the buffer member 200. In some preferred examples, 5 mm ≤ L2 ≤ 10 mm, and 5 mm ≤ L3 ≤ 10 mm. For example, L2 and L3 may be 5 mm, 5.5 mm, 6 mm, 6.5 mm, 7 mm, 7.5 mm, 8 mm, 8.5 mm, 9 mm, 9.5 mm, 10 mm, or the like. Thus, this can make the buffer member 200 have good support performance and improve the compressibility ratio of the buffer member 200.

As shown in FIG. 10 to FIG. 13, in some embodiments, the groove 21 forms a strip-shaped groove 21 extending along the length direction of the buffer member 200 or the width direction of the buffer member 200.

As shown in FIG. 10 to FIG. 13, the groove 21 forms a long strip-shaped groove 21, and any end of the groove 21 can have an open end, where the strip-shaped groove 21 can extend along the length direction of the buffer member 200 or along the width direction of the buffer member 200. Thus, on the basis of making the buffer member 200 have good support performance and high compressibility ratio, the quantity of grooves 21 is reduced, the structure of the buffer member 200 is simplified, and the manufacturing and forming of the buffer member 200 is facilitated.

In some embodiments, the buffer block 20 is a porous material member.

The porous material may be made by a foaming process. By using such porous foamed material members, the manufacturing cost can be reduced on the basis of improving the compressibility of a buffer pad 200.

In some embodiments, a material of the buffer block 20 includes at least one of polyethylene, polypropylene, polyurethane, or silicone rubber.

A buffer member 20 may use any one of polyethylene, polypropylene, polyurethane, or silicone rubber, and may also be a composite material member. In the above technical solution, by using such material members, the manufacturing cost can be reduced on the basis of improving the compressibility of the buffer member 200.

As shown in FIG. 6 and FIG. 12 to FIG. 13, in some embodiments, opposite sides of the buffer member 200 in a thickness direction thereof are respectively provided with the clearance groove 202, and the clearance grooves 202 are oppositely arranged in the thickness direction of the buffer member 200.

As shown in FIG. 6, buffer blocks 20 are respectively provided on the front and back sides of the support plate 10, and the buffer blocks 20 correspond in position in the front-back direction. As shown in FIG. 12 and FIG. 13, a groove 21 is respectively formed on the front side and the back side of the buffer block 20, and the grooves 21 correspond in positions in the front-back direction, thereby making the positions of the clearance grooves 202 on two sides of the buffer member 200 correspond. Thus, when the electrode assembly 120 swells, this can prevent the buffer member 200 from moving, deforming, or the like in its length or width direction, which is convenient for improving the stability of the buffer member 200, and thereby improving the reliability of the support of the buffer member 200.

As shown in FIG. 4 to FIG. 13, in some embodiments, an area of the pressure-bearing surface 201 of the buffer member 200 is S1, and an area of the clearance groove 202 is S2, S2/S1 ranging from 0 to 70%.

As shown in FIG. 4 to FIG. 13, the area of the pressure-bearing surface 201 of the buffer member 200 provided with the clearance groove 202 is S1, which refers to the area of the entire buffer member 200, that is, the area of the internal region enclosed by the edges of the buffer member 200. The area of the clearance groove 202 is S2. As shown in FIG. 4, S2 herein is the cross-sectional area of the pores between the plurality of buffer blocks 20. As shown in FIG. 7, S2 herein is the cross-sectional area of the plurality of grooves 21. If the area occupied by the clearance groove 202 is too large, it is easy to cause the contact area of the buffer member 200 with the electrode assembly 120 or the housing 110 to be too small, thereby resulting in an inability to provide effective support. To this end, the range of S2/S1 may be limited to 0 to 70%, and S2/S1 may be any value ranging from 0 to 70%, such as 10%, 20%, 30%, 40%, 50%, 60%, 70%, or the like.

Thereby, the effective area of the buffer member 200 can be reduced, the compressibility ratio of the buffer member 200 is improved, making the buffer member 200 have both good anti-deformation capability and high compressibility ratio, thereby mitigating the swelling force of the battery cell 100 in the later stage.

As shown in FIG. 4 to FIG. 13, in some embodiments, S2/S1 ranges from 20% to 50%.

If the area occupied by the clearance groove 202 is too small, the space of the clearance groove 202 is too small, and it is difficult to effectively improve the compression rate of the buffer member 200. In some preferred examples, S2/S1 ranges from 20% to 50%, that is, S2/S1 may be 20%, 25%, 30%, 35%, 40%, 45%, or 50%, thereby further making the buffer member 200 have both good anti-deformation capability and high compressibility ratio, thereby mitigating the swelling force of the battery cell 100 in the later stage.

As shown in FIG. 5 and FIG. 8, in some embodiments, a thickness of the buffer member 200 is H1, and a dimension of the clearance groove 202 in the thickness direction of the buffer member 200 is H2, H2/H1 ranging from 0 to 90%.

As shown in FIG. 5 and FIG. 8, if the thickness occupied by the clearance groove 202 is excessive, the buffer member 200 is easy to compress and deform, and thus the buffer member 200 is difficult to achieve an effective support effect. To this end, H2/H1 is limited to 0 to 90%, and H2/H1 may be any value ranging from 0 to 90%, such as 10%, 20%, 30%, 40%, 50%, 60%, 70%, 80%, 90%, or the like. Thus, the buffer member 200 can have both good anti-deformation capability and high compressibility ratio, thereby mitigating the swelling force of the battery cell 100 in the later stage.

In some preferred embodiments, H2/H1 ranges from 30% to 85%.

If the thickness occupied by the clearance groove 202 is too small, it is difficult to effectively improve the compression rate of the buffer member 200. In some preferred examples, H2/H1 ranges from 30% to 85%, that is, H2/H1 may be 30%, 35%, 40%, 45%, 50%, 55%, 60%, 65%, 70%, 75%, 80%, 85%, or the like, thereby further making the buffer member 200 have both good anti-deformation capability and high compressibility ratio, thereby mitigating the swelling force of the battery cell 100 in the later stage.

Further, H2/H1 preferably ranges from 50% to 80%, that is, H2/H1 may be any value ranging from 50% to 80%, such as 50%, 53%, 62%, 67%, 73%, 78%, 80%, or the like.

In some embodiments, a compression rate of the buffer member 200 under 1 MPa is not less than 60%.

The compression rate of the buffer member 200 refers to the ratio of the reduced thickness of the buffer member 200 when the buffer member 200 is compressed to the thickness of the buffer member 200 in a free state. A vernier caliper can be used to measure the compression rate of the buffer member 200. Specifically, a free thickness d1 of the buffer member 200 is measured, an average value is taken from at least three repetitions; the test buffer member 200 is placed between two parallel metal plates, a specific pressure is applied and maintained for 1 min, then a thickness d2 of the buffer member 200 is tested with a vernier caliper, and an average value is taken from at least three repetitions. The compression rate of the buffer member 200 is calculated: compression rate (%) of the buffer member 200 = (d2 - d1)/d1 × 100%.

If the compression rate of the buffer member 200 is too small, the compressible amount of the buffer member 200 is small, and it is difficult to absorb the deformation of the electrode assembly 120, especially in the later stage of cycling of the battery cell 100, the buffer member 200 is difficult to compress, leading to insufficient swelling space of the electrode assembly 120, thereby affecting the swelling force of the battery cell 100 in the later stage. To this end, the compression rate of the buffer member 200 under 1 MPa is not less than 60%, which may be 60%, or 70%, 80%, or the like. Thus, the buffer member 200 can be compressed and deformed with the swelling of the electrode assembly 120 to absorb the swelling of the electrode assembly 120 as much as possible and mitigate the swelling force of the battery cell 100 in the later stage of cycling.

In some examples, the compression rate of the buffer member 200 under a first pressure ranges from 60% to 90%, the first pressure ranges from 0.8 MPa to 1.2 MPa, and the first pressure may be 0.8 MPa, 0.9 MPa, 1.0 MPa, 1.1 MPa, 1.2 MPa. Further, when the buffer pad 200 receives the first pressure per unit area, the compression rate of the buffer pad 200 ranges from 70% to 90%.

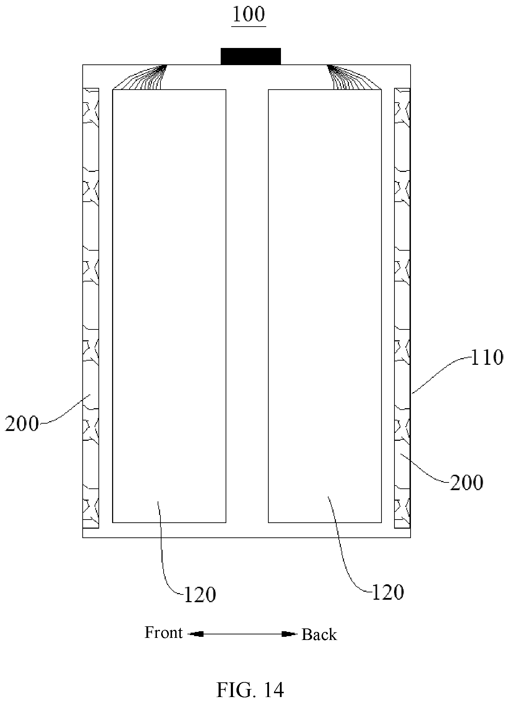

As shown in FIG. 14 to FIG. 16, according to a second aspect, the present application provides a battery cell 100, including a housing 110, an electrode assembly 120, and a buffer member 200, where the buffer member 200 and the electrode assembly 120 are both disposed in the housing 110.

The housing 110 refers to the outermost structural member of the battery cell 100, and the housing 110 accommodates the electrode assembly 120, the electrolyte, and the like. The housing 110 herein may be an aluminum shell.

The electrode assembly 120 is disposed in the housing 110, and the electrode assembly 120 may be stacked, that is, a plurality of electrode plates of the electrode assembly 120 are stacked and arranged, and the electrode assembly 120 may also be wound, that is, the positive electrode plate and the negative electrode plate of the electrode assembly 120 are stacked and then wound to form. In addition, one electrode assembly 120 may be disposed in the housing 110, or a plurality of electrode assemblies 120 may be provided therein.

The buffer member 200 is the buffer member 200 proposed in the first aspect of the present application, and the buffer member 200 is disposed in the housing 110, that is, the buffer member 200 is located inside one battery cell 100. The buffer member 200 may be located between the housing 110 and the electrode assembly 120, or between adjacent electrode assemblies 120.

By providing the clearance groove 202 in the buffer member 200, a portion of the buffer member 200 is spaced from the housing 110 or the electrode assembly 120, thereby reducing the effective area of the buffer member 200. On the basis of ensuring that the buffer member 200 has a certain anti-deformation capability, the compressibility ratio of the buffer member 200 is improved, making the buffer member 200 have strong anti-deformation capability and high compressibility ratio, which can satisfy the manufacturing requirements of the battery 1000. For example, the requirements for anti-deformation of the buffer member 200 in the vacuum baking process can be satisfied, and at the same time, the needs of the full life cycle of the battery cell 100 can be satisfied.

During the charging and discharging of the battery cell 100 and the electrode assembly 120 undergoing swelling deformation, the electrode assembly 120 compresses the buffer member 200 when swelling, making the buffer member 200 compress and deform, and the space occupied by the buffer member 200 is reduced, thereby increasing the space in the housing 110 for accommodating the electrode assembly 120, and the swelled portion of the electrode assembly 120 can occupy this portion of space, thereby reducing the stress on the electrode assembly 120 when swelling, and at the same time minimizing the deformation amount of the housing 110 as much as possible, avoiding problems of damage to the battery 1000 or the electric apparatus and reduced service life caused by transition and deformation of the housing 110.

At the same time, in the later stage of cycling, the buffer member 200 may have a large compression amount, further reducing the space occupied by the buffer member 200 itself, ensuring the swellable space of the electrode assembly 120 to a certain extent, thereby mitigating the swelling force of the battery cell 100.

In the battery cell 100 of the above structure, by using the above buffer member 200, during the manufacturing process of the battery 1000, the buffer member 200 has strong support capability and can satisfy the requirements for anti-deformation performance in vacuum baking. In the early stage of cycling of the battery cell 100, the buffer member 200 can provide strong support capability, reducing electrode plate deformation, improving the phenomenon of electrode plate wrinkling caused by swelling, and mitigating lithium precipitation or sodium precipitation problems during cycling. In the later stage of cycling of the battery cell 100, the buffer member 200 can be greatly compressed, reducing the occupation of space inside the housing 110 by the buffer member 200, ensuring the swellable space of the electrode assembly 120 to a certain extent, mitigating the swelling force of the battery cell 100, and prolonging the service life of the battery cell 100.

As shown in FIG. 14, in some embodiments, a buffer member 200 is disposed between the housing 110 and the electrode assembly 120.

By providing the buffer member 200 between the housing 110 and the electrode assembly 120, effective support can be provided to the electrode assembly 120, satisfying the requirements for anti-deformation performance in vacuum baking, and at the same time reducing electrode plate deformation. In addition, when the battery cell 100 is charged and discharged, as the electrode assembly 120 swells, the buffer member 200 undergoes compression deformation, increasing the space inside the battery cell 100 for accommodating the electrode assembly 120, thereby reducing the stress on the electrode assembly 120 due to swelling, and at the same time effectively reducing the probability of deformation of the housing 110, thereby mitigating the problem of large swelling force in the later stage of cycling of the battery cell 100 and prolonging the service life of the battery cell 100.

In the above technical solution, by providing the buffer member 200 between the housing 110 and the electrode assembly 120, the installation is convenient, and the stress on the housing 110 when the electrode assembly 120 swells can be reduced, effectively reducing the probability of deformation of the housing 110.

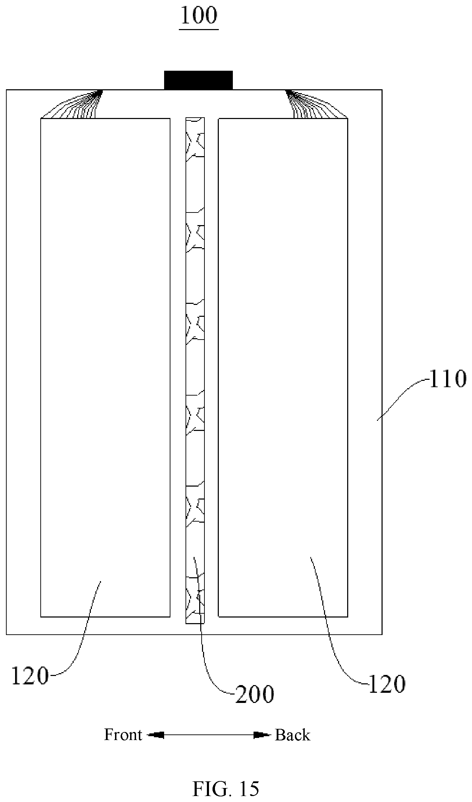

As shown in FIG. 15 to FIG. 16, in some embodiments, the battery cell 100 includes a plurality of electrode assemblies 120, and the buffer member 200 is disposed between two adjacent electrode assemblies 120.

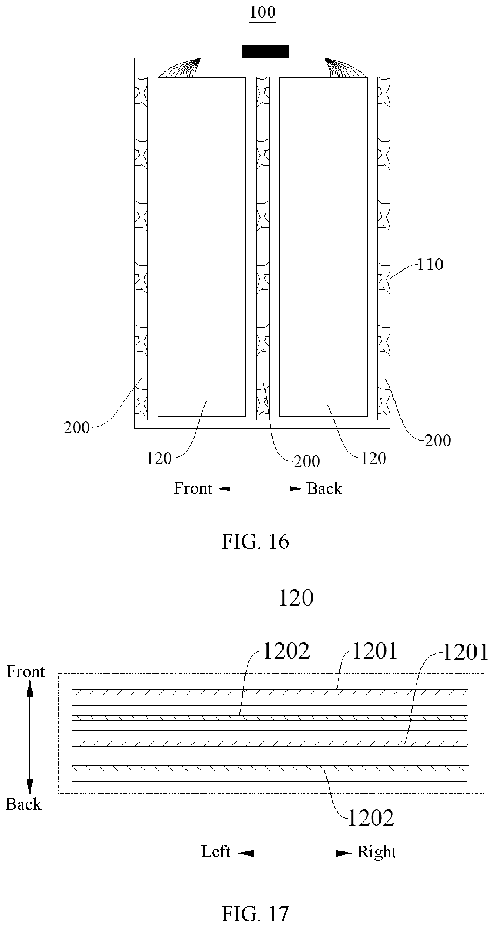

As shown in FIG. 15 and FIG. 16, a buffer member 200 is disposed between adjacent electrode assemblies 120. For example, a buffer member 200 may be disposed between any two adjacent electrode assemblies 120, or a buffer member 200 may be disposed between some two adjacent electrode assemblies 120, so that one or more buffer members 200 may be provided.

In the above technical solution, by providing the buffer member 200 between the electrode assemblies 120, the buffer member 200 can effectively absorb the swelling amount of the electrode assemblies 120, thereby reducing the stress on the housing 110 when the electrode assemblies 120 swell.

As shown in FIG. 16, a plurality of buffer members 200 are provided in the battery cell 100, at least one buffer member 200 is disposed between the housing 110 and the electrode assembly 120, and at least one buffer member 200 is disposed between two adjacent electrode assemblies 120. Thus, by providing a plurality of buffer members 200 at different positions, the swelling amount of the electrode assemblies 120 can be effectively absorbed, and the stress on the housing 110 when the electrode assemblies 120 swell can be reduced.

In some embodiments, a group margin of the battery cell 100 ranges from 96% to 105%.

The housing 110 has two oppositely arranged inner wall surfaces, and the two inner wall surfaces are located on two sides of the arrangement direction of the buffer member 200 and the electrode assembly 120, such as the inner wall surfaces in the front-back direction as shown in FIG. 14. The group margin of the battery cell 100 is the ratio of the sum of the thickness of the electrode assembly 120 and the free total thickness of the buffer member 200 to the distance between the opposite two inner wall surfaces of the housing 110, where the thickness of the electrode assembly 120 herein is the thickness in a fully charged state. By using the above buffer member 200, the group margin of the battery cell 100 is between 96% and 105%, that is, in a thickness direction of the battery cell 100, the buffer member 200 and the electrode assembly 120 can substantially fill the entire inner cavity of the housing 110, thereby ensuring that the buffer member 200 can provide effective support to the electrode assembly 120 to a certain extent and mitigating interface abnormality problems such as electrode plate wrinkling caused by failure of the support of the buffer member 200 to the electrode assembly 120.

Preferably, the group margin of the battery cell 100 ranges from 98% to 103%, thereby further improving the support of the buffer member 200 to the electrode assembly 120, especially mitigating interface abnormality problems such as electrode plate wrinkling caused by failure of the support of the buffer member 200 to the electrode assembly 120 in the fully discharged state.

In some embodiments, a ratio of a thickness of the buffer member 200 to a thickness of the electrode assembly 120 ranges from 2% to 15%.

The thickness of the buffer member 200 herein is the thickness of the buffer member 200 in a free state, and the thickness of the electrode assembly 120 is the thickness of the electrode assembly 120 in a fully charged state. If the thickness occupied by the buffer member 200 is excessive, it is easy to affect the energy density of the battery cell 100, and if the thickness occupied by the buffer member 200 is too small, it is difficult to provide effective buffering, thereby leading to excessive swelling force on the housing 110, especially leading to the problem of excessive swelling force caused by limited compression of the buffer member 200 in the later stage of cycling of the battery cell 100. To this end, the ratio of the thickness of the buffer member 200 to the thickness of the electrode assembly 120 is limited to between 2% and 15%, and the ratio of the thickness of the buffer member 200 to the thickness of the electrode assembly 120 may be 2%, 3%, 4%, 5%, 6%, 7%, 8%, 9%, 10%, 11%, 12%, 13%, 14%, or 15%. Thus, this can both improve the energy density of the battery cell 100 and make the buffer member 200 provide effective buffering, mitigate the swelling force on the housing 110 when the electrode assembly 120 swells, and effectively reduce the probability of deformation of the housing 110.

Preferably, the ratio of the thickness of the buffer member 200 to the thickness of the electrode assembly 120 ranges from 5% to 10%, that is, the ratio of the thickness of the buffer member 200 to the thickness of the electrode assembly 120 may be 5%, 5.5%, 6.5%, 7.5%, 8.5%, 9.1%, 9.5%, 10%, or the like. Thus, the energy density of the battery cell 100 can be further improved, and the buffer member 200 can provide effective buffering, mitigate the swelling force on the housing 110 when the electrode assembly 120 swells, and effectively reduce the probability of deformation of the housing 110.

In the embodiments of the present application, the setting position of the buffer member 200 relative to the electrode assembly 120 may be flexibly set according to the structure of the electrode assembly 120.

As shown in FIG. 3 and FIG. 14 to FIG. 16, in some embodiments, the electrode assembly 120 includes a plurality of electrode plates arranged in a wound manner, and an outer peripheral surface of the electrode assembly 120 includes a straight portion 121 and a bent portion 122 connected to an end of the straight portion 121, at least one of the straight portion 121 and the bent portion 122 being oppositely provided with the buffer member.

A plurality of electrode plates arranged in a wound manner, that is, the positive electrode plate 1201 and the negative electrode plate 1202 are stacked and then wound around a set axis to form the electrode assembly 120. The straight portion 121 refers to the portion where the electrode plates extend along a plane during winding; and the bent portion 122 refers to the portion where the electrode plates extend along an arc surface during winding. For example, as shown in FIG. 3, the front side surface and the back side surface of the electrode assembly 120 are formed as the straight portion 121, and the left and right end portions of the front side surface and the back side surface are the bent portion 122, or the left side surface and the right side surface may also be entirely formed as the bent portion 122.

The straight portion 121 is oppositely provided with the buffer member 200, so that the buffer member 200 may buffer the region of the electrode assembly 120 corresponding to the straight portion 121; and the bent portion 122 is oppositely provided with the buffer member 200, so that the region of the buffer member 200 facing the bent portion 122 is substantially formed in an arc shape, so that the buffer member 200 can buffer the swelling force of the bent portion 122 and mitigate the risk of electrode fracture and lithium precipitation of the electrode assembly 120.

As shown in FIG. 14 to FIG. 17, in some embodiments, the electrode assembly 120 includes a plurality of positive electrode plates 1201 and a plurality of negative electrode plates 1202 arranged in a stacked manner along a first direction, and the buffer member 200 is oppositely provided with a surface of the electrode assembly 120 on at least one side along the first direction.

The first direction herein is the front-back direction as shown in FIG. 17, all positive electrode plates 1201 and all negative electrode plates 1201 of the electrode assembly 120 are stacked, and the positive electrode plates 1201 and the negative electrode plates 1202 all extend along a plane perpendicular to the first direction. The electrode assembly 120 of the above structure swells in the first direction during use. Therefore, the buffer member 200 is oppositely provided with a surface of an electrode assembly 20 on at least one side along the first direction, so that the buffer member 200 can more fully provide buffering and support to the electrode plates, reducing electrode plate wrinkling, which makes the buffer member 200 provide effective buffering and support. In addition, the required area of the buffer member 200 is small and the cost is low.

In some embodiments, a groove opening of the clearance groove 202 is formed on the pressure-bearing surface 201, and a stacking direction of electrode plate in a region of the electrode assembly 120 opposite to the pressure-bearing surface 201 is perpendicular to the pressure-bearing surface 201.

The region of the electrode assembly 120 opposite to the pressure-bearing surface 201 herein, for example, in the region corresponding to the straight portion 121 in the wound electrode assembly 120, the stacking direction of the positive electrode plate 1201 and the negative electrode plate 1202 is perpendicular to the pressure-bearing surface 201; and for another example, in the stacked electrode assembly 20, a plurality of positive electrode plates 1201 and a plurality of negative electrode plates 1202 are stacked along the first direction (the front-back direction as shown in FIG. 17), and the pressure-bearing surface 201 is perpendicular to the first direction.

During use, the electrode plate is more prone to swelling along the stacking direction. By making the stacking direction of the electrode plate in the region opposite to the pressure-bearing surface 201 perpendicular to the pressure-bearing surface 201, the pressure-bearing surface 201 can more fully provide buffering and support to the electrode plate, so as to enhance the effect of reducing electrode plate wrinkling.

As shown in FIG. 3 and FIG. 14 to FIG. 16, in some embodiments, the buffer member 200 at least corresponds to the surface with the largest area of the electrode assembly 120.

As shown in FIG. 3 and FIG. 14 to FIG. 16, some electrode assemblies 120 have two end surfaces and four side surfaces, where the areas of two oppositely arranged side surfaces are relatively large, which are the large surfaces of the electrode assembly 120, and the areas of the other two oppositely arranged side surfaces are relatively small, which are the small surfaces of the electrode assembly 120. The buffer member 200 corresponds to the large surface, or both the large surfaces and the small surfaces have corresponding buffer members 200, or one end surface and the large surface both have corresponding buffer members 200, or both two end surfaces and the large surfaces have corresponding buffer members 200. The buffer member 200 corresponds to the large surface, thereby providing effective support to the electrode assembly 120 and reducing the phenomenon of electrode plate wrinkling. At the same time, when the electrode assembly 120 swells, the swelling amount of the large surface is relatively large. Therefore, by providing the buffer member 200 opposite to the large surface of the electrode assembly 120, the swelling of the large surface can be absorbed as much as possible, reducing the stress on the electrode assembly 120 due to swelling.

In addition, the buffer member 200 can be continuously provided and disposed between any adjacent electrode assemblies 120 in a folding or winding manner.

The battery 1000 according to the embodiments of the third aspect of the present application includes the battery cell 100 according to the embodiments of the second aspect of the present application.

The electric apparatus 2000 according to the embodiments of the fourth aspect of the present application includes the battery 1000 according to the embodiments of the third aspect of the present application, where the battery 1000 is configured to supply electrical energy for the electric apparatus 2000. Thus, the use of the above battery 1000 is conducive to improving the safety and reliability of use of the electric apparatus 2000.

Optionally, as shown in FIG. 1, when the battery 1000 is used in a vehicle, the battery 1000 may be disposed at the bottom, front or rear of the vehicle. The battery 1000 may be configured to supply power to the vehicle. For example, the battery 1000 may be used as an operational power source for the vehicle. The vehicle may further include a controller and a motor, where the controller is configured to control the battery 1000 to supply power to the motor, for example, to satisfy power needs of start, navigation, and driving of the vehicle.

The following describes a battery 1000 according to a specific embodiment of the present application and a vehicle having the same are described with reference to the accompanying drawings.

As shown in FIG. 1, the battery 1000 is provided at the bottom of the vehicle. As shown in FIG. 4, FIG. 5, and FIG. 14, the battery 1000 includes a plurality of battery cells 100, and each battery cell 100 includes a housing 110, an electrode assembly 120, and a buffer member 200, where the housing 110 includes a housing body 111 and an end cover 112, and the electrode assembly 120 and the buffer member 200 are disposed in the housing 110.

The buffer member 200 includes a support plate 10 and a plurality of buffer blocks 20, the plurality of buffer blocks 20 are adhered to one side surface of the support plate 10, and the plurality of buffer blocks 20 are arranged at equal intervals, where the space between two adjacent buffer blocks 20 forms a clearance groove 202. The buffer member 200 is installed between the housing 110 and the electrode assembly 120, the buffer block 20 can abut against the electrode assembly 120, and the provision of the clearance groove 202 makes the support plate 10 spaced from the electrode assembly 120, and the other side of the support plate 10 abuts against the housing 110.

By providing the clearance groove 202, a portion of the buffer member 200 is spaced from the housing 110 or the electrode assembly 120, thereby reducing the effective area of the buffer member 200. On the basis of ensuring that the buffer member 200 has a certain anti-deformation capability, the compressibility ratio of the buffer member 200 is improved. Thus, during a charging and discharging cycle of the battery cell 100, the buffer member 200 can both mitigate the swelling force exerted by the electrode assembly 120 on the housing 110 through compression deformation, and in the later stage of cycling, the buffer member 200 can have a large compression amount, reducing the space occupied by the buffer member 200 itself, ensuring the swellable space of the electrode assembly 120 to a certain extent, thereby mitigating the swelling force of the battery cell 100.

In conclusion, it should be noted that the foregoing embodiments are merely for describing the technical solutions of the present application rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

## Claims

1. A buffer member for use inside a battery cell, the battery cell comprising an electrode assembly, wherein the buffer member has a pressure-bearing surface facing or facing away from the electrode assembly, and the pressure-bearing surface is provided with a clearance groove.

2. The buffer member according to claim 1, wherein the buffer member comprises a support plate and a plurality of buffer blocks, the buffer blocks are disposed on the support plate, the plurality of buffer blocks are arranged at intervals, and a gap between two adjacent buffer blocks forms the clearance groove.

3. The buffer member according to claim 2, wherein the buffer blocks are fixedly connected to the support plate.

4. The buffer member according to claim 2, wherein the plurality of buffer blocks on one side of the support plate are arranged at intervals along a length direction and/or a width direction of the support plate.

5. The buffer member according to claim 4, wherein a distance between two adjacent buffer blocks is L1, L1 being not greater than 20 mm.

6. The buffer member according to claim 2, wherein a thickness of the support plate ranges from 30 µm to 200 µm.

7. The buffer member according to claim 2, wherein a compression rate of the support plate under 1 MPa is not greater than 5%.

8. The buffer member according to claim 2, wherein a material of the support plate comprises at least one of high-density polyethylene, polymethacrylate, polyethylene terephthalate, or polytetrafluoroethylene.

9. The buffer member according to claim 1, wherein the buffer member is a buffer block, a portion of an outer surface of the buffer block is recessed inward to form a groove, and the groove forms the clearance groove.

10. The buffer member according to claim 9, wherein the groove comprises a plurality of grooves, and the plurality of grooves are arranged at intervals along a length direction of the buffer member and/or a width direction of the buffer member.

11. The buffer member according to claim 10, wherein a dimension of each groove in the length direction of the buffer member is L2, and a dimension of each groove in the width direction of the buffer member is L3, L2 being not greater than 20 mm, and L3 being not greater than 20 mm.

12. The buffer member according to claim 9, wherein the groove forms a strip-shaped groove extending along the length direction of the buffer member or the width direction of the buffer member.

13. The buffer member according to any one of claims 2 to 12, wherein a material of the buffer blocks comprises at least one of polyethylene, polypropylene, polyurethane, or silicone rubber.

14. The buffer member according to any one of claims 1 to 13, wherein opposite sides of the buffer member in a thickness direction thereof are respectively provided with the clearance groove, and the clearance grooves are oppositely arranged in the thickness direction of the buffer member.

15. The buffer member according to any one of claims 1 to 14, wherein an area of the pressure-bearing surface of the buffer member is S1, and an area of the clearance groove is S2, S2/S1 ranging from 0 to 70%.

16. The buffer member according to claim 15, wherein S2/S1 ranges from 20% to 50%.

17. The buffer member according to any one of claims 1 to 16, wherein a thickness of the buffer member is H1, and a dimension of the clearance groove in the thickness direction of the buffer member is H2, H2/H1 ranging from 0 to 90%.

18. The buffer member according to claim 17, wherein H2/H1 ranges from 30% to 85%.

19. The buffer member according to any one of claims 1 to 18, wherein a compression rate of the buffer member under 1 MPa is greater than 60%.

20. A battery cell, comprising a housing, an electrode assembly, and the buffer member according to any one of claims 1 to 19, wherein the buffer member and the electrode assembly are both disposed in the housing.

21. The battery cell according to claim 20, wherein the buffer member is disposed between the housing and the electrode assembly.

22. The battery cell according to any one of claims 20 to 21, wherein the battery cell comprises a plurality of electrode assemblies, and the buffer member is disposed between two adjacent electrode assemblies.

23. The battery cell according to any one of claims 20 to 22, wherein a group margin of the battery cell ranges from 96% to 105%.

24. The battery cell according to any one of claims 20 to 23, wherein a ratio of a thickness of the buffer member to a thickness of the electrode assembly ranges from 2% to 15%.

25. The battery cell according to any one of claims 20 to 24, wherein the electrode assembly comprises a plurality of electrode plates arranged in a wound manner, and an outer peripheral surface of the electrode assembly comprises a straight portion and a bent portion connected to an end of the straight portion, at least one of the straight portion and the bent portion being oppositely provided with the buffer member; or
the electrode assembly comprises a plurality of positive electrode plates and a plurality of negative electrode plates arranged in a stacked manner along a first direction, and the buffer member is oppositely provided with a surface of the electrode assembly on at least one side along the first direction.

26. The battery cell according to any one of claims 20 to 25, wherein a groove opening of the clearance groove is formed on the pressure-bearing surface, and a stacking direction of electrode plate in a region of the electrode assembly opposite to the pressure-bearing surface is perpendicular to the pressure-bearing surface.

27. A battery, comprising the battery cell according to any one of claims 20 to 26.

28. An electric apparatus, comprising the battery according to claim 27, wherein the battery is configured to supply electrical energy.
